# FASCICULE DE BREVET EUROPEEN

(11) **EP 0 578 592 B1**
(45) Date de publication et mention de la délivrance du brevet: **03.04.1996**
(21) Numéro de dépôt: 93420289.6
(22) Date de dépôt: 01.07.1993
(51) Int. Cl.: B65G 47/49

(54) **Dispositif de codage mécanique**
Mechanische Kodiervorrichtung
Mechanical coding device

(30) Priorité: 06.07.1992 FR 9208563
(43) Date de publication de la demande: 12.01.1994
(73) Titulaire: ELCOM, F-38300 Bourgoin-Jallieu (FR)
(72) Inventeur: Dailler, Didier, F-38080 L'Isle d'Abeau (FR); Teillon, Alain, F-38300 Bourgoin Jallieu (FR)
(74) Mandataire: Maureau, Philippe

(56) Documents cités:
- CH-A- 463 385
- DE-B- 1 811 997
- DE-U- 1 785 992

## Description

La présente invention concerne un dispositif de codage mécanique, et plus particulièrement un dispositif de codage pour une installation de transfert.

Dans une installation de transfert, un article ou un objet est amené à circuler sur un réseau de voies reliant différents postes de traitement. Un article est le plus souvent disposé dans un contenant, tel qu'une caisse, ou supporté par un plateau.

Un processus de traitement d'un article, tel qu'un tri ou un usinage, nécessite l'identification de l'article traité et/ou la détermination d'un état de l'article traité.

L'identification peut concerner des articles se différenciant les uns par rapport aux autres selon une caractéristique comme leurs tailles ou leurs formes.

La détermination d'un état peut concerner la qualité d'une pièce qui est déclarée bonne ou mauvaise consécutivement à un usinage.

Une installation de transfert étant généralement automatisée, l'identification d'un article et/ou la détermination d'un état doit être effectuée de façon automatique et, de ce fait, l'information relative à l'état et/ou à une caractéristique d'identification de l'article doit être mémorisée. A cet effet, on emploie généralement un dispositif qui met en oeuvre une méthode de codage binaire, dans laquelle des éléments ou nombres ne peuvent prendre que deux valeurs.

La juxtaposition de plusieurs éléments binaires permet de codifier un état ou une caractéristique.

Il est connu de déterminer, par mise en oeuvre d'une méthode de codage binaire, un état ou une caractéristique selon plusieurs techniques différentes.

Une première technique met en oeuvre un codage magnétique. Elle consiste à fixer sur le plateau ou la caisse un ensemble d'éléments magnétiques qui sont mis, à chaque poste de traitement, en correspondance avec une tête magnétique d'écriture et de lecture du code.

Cette technique présente l'inconvénient d'être complexe puisque nécessitant des connexions, et d'être peu adaptée pour les petites installations, comportant un nombre réduit de postes.

Une autre technique met en oeuvre un codage mécanique. Elle consiste à fixer sur la caisse ou le plateau un corps contenant

des pions coulissants susceptibles d'être déplacés entre deux positions prédéterminées. Le déplacement des pions est obtenu, aux différents postes de traitement, par des vérins ou des cames non solidaires du plateau ou de la caisse. Il est aussi connu (par exemple du document CH-A-463 385) d'utiliser un système de codage avec un déplacement des pions effectué par électro-aimants.

Le déplacement des pions, à un poste de traitement, réalise une écriture d'une information mémorisée.

La constatation, à l'aide de capteurs, du déplacement ou du non-déplacement de chaque pion permet de réaliser une lecture de l'information mémorisée.

Cette technique n'est pas fiable car les pions sont sujets à des coïncements et nécessitent donc également un entretien important.

Le but de la présente invention est de remédier à ces inconvénients en proposant un dispositif de codage mécanique fiable, simple, ne nécessitant pas un entretien important, et de mise en oeuvre aisée.

A cet effet, le dispositif de codage qu'elle concerne comporte un corps dans lequel au moins un élément de codage est susceptible d'être déplacé entre deux positions stables prédéterminées, et est caractérisé en ce que le corps présente au moins un évidement débouchant dans deux faces adjacentes du corps, dans lequel sont disposés un élément de codage et un organe élastique tendant à rejeter l'élément de codage vers l'extérieur de l'évidement, tandis qu'un obstacle, situé dans la zone d'intersection des faces dans lesquelles débouche l'évidement, et partageant l'ouverture de l'évidement sur l'extérieur en deux fenêtres, empêche l'élément de codage de s'échapper hors de l'évidement, et permet à l'élément de codage de se positionner de façon stable dans l'une ou l'autre des deux fenêtres de l'ouverture de l'évidement.

Les deux positions stables situent l'élément de codage selon deux emplacements situés de part et d'autre de l'obstacle, et correspondant chacun à l'une des deux fenêtres de l'ouverture définie par l'obstacle.

Chacune des deux positions stables d'un élément de codage est utilisée pour codifier une information relative à un article traité.

En effet, grâce à des mécanismes tels que des vérins, des cames ou des électroaimants, il est possible de faire passer un élément de codage de la position stable à un instant donné, à l'autre position stable, en exerçant une simple pression sur l'élément de codage lorsque celui-ci est dans sa première position.

Lors d'un changement de position, I'élément élastique est comprimé jusqu'à ce que l'élément de codage soit suffisamment rentré à l'intérieur de l'évidement pour basculer vers la nouvelle position.

Des capteurs permettent de constater la position occupée par un élément de codage, et donc d'effectuer une lecture de l'information mémorisée.

Afin de permettre une lecture aisée de la position de chaque élément de codage par un capteur correspondant, chaque élément de codage fait partiellement saillie par rapport à une face du corps dans laquelle débouche l'évidement, lorsqu'il est positionné dans la fenêtre de l'ouverture correspondant à cette face.

Afin de faciliter le passage de l'élément de codage d'une fenêtre de l'ouverture à l'autre fenêtre, chaque élément de codage est constitué par une bille.

Selon une variante d'exécution du dispositif de codage, chaque élément de codage est constitué par un cylindre.

Afin d'obtenir un passage aisé et un maintien efficace de chaque élément de codage dans l'une et l'autre de ses deux positions stables, chaque organe élastique associé à un élément de codage est constitué par un ressort.

Dans le but d'obtenir un dispositif de conception simple, l'obstacle, situé dans la zone d'intersection des deux faces dans lesquelles débouchent les fenêtres cylindriques, est constitué par une tige cylindrique, et l'évidement contenant chaque élément de codage débouche dans deux faces adjacentes perpendiculaires au corps.

Avantageusement, le corps présente au moins une rainure ménagée dans une des faces dans lesquelles débouche l'évidement et débouchant dans l'évidement lui-même. Cette disposition facilite le déplacement des éléments de codage à l'aide d'une came, par exemple pour réaliser une réinitialisation du système.

Afin de permettre à des capteurs inductifs de lire la position prise par un élément de codage, chaque élément de codage est métallique et le corps est réalisé en un matériau synthétique.

Avantageusement dans ce cas, des pièces métalliques sont rapportées sur au moins une face du corps dans laquelle débouche chaque évidement, ces pièces métalliques étant chacune placées en vis-à-vis avec un élément de codage. Cette disposition permet de lire l'information mémorisée sans arrêter le déplacement du dispositif de codage.

De toute façon, l'invention sera bien comprise à l'aide de la description qui suit, en référence au dessin schématique annexé représentant, à titre d'exemples non limitatifs, plusieurs formes d'exécution de ce dispositif de codage :
Figure 1 est une vue en perspective montrant un plateau sur lequel est fixé un dispositif de codage auquel sont associés un vérin et un capteur ;
Figure 2 est une vue en perspective éclatée du dispositif de codage de figure 1 ;
Figure 3 est une vue en perspective en position montée du dispositif de codage de figures 1 et 2 ;
Figures 4 et 5 sont des vues en coupe du dispositif de codage des figures 1 à 3 et montrant chacune l'une des deux positions stables de l'élément de codage ;
Figure 6 est une vue de face d'une variante de réalisation du dispositif de codage, dans laquelle l'élément de codage est constitué par un cylindre ;
Figure 7 est une vue de face d'une variante de réalisation du dispositif de codage, comportant plusieurs éléments de codage ;
Figure 8 est une vue de face d'une variante de réalisation du dispositif de codage, comportant des pièces métalliques rapportées sur le corps, et
Figure 9 est une vue en coupe selon IX-IX de figure 8.

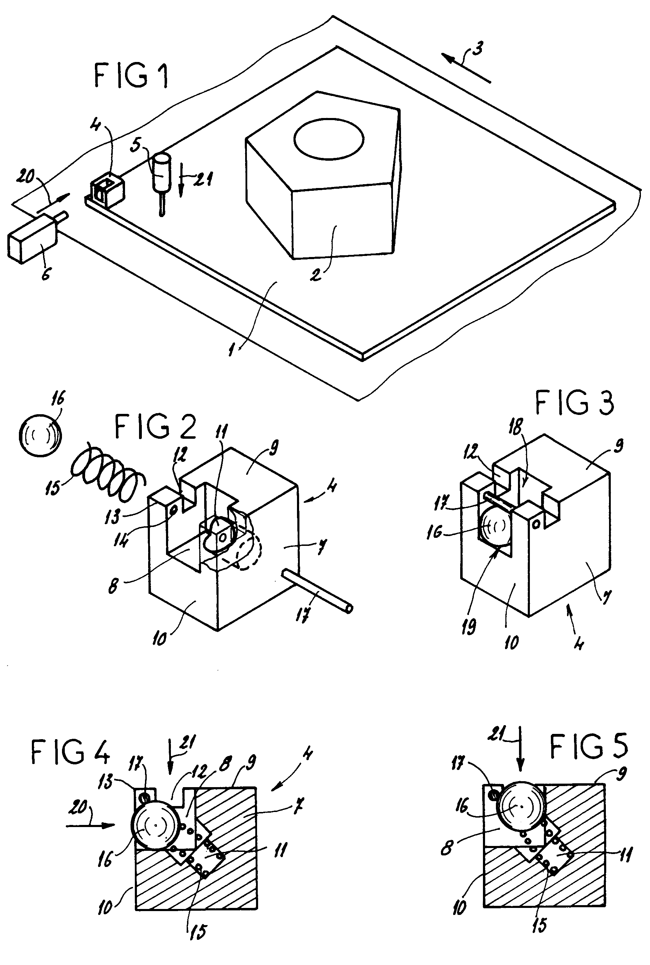

Comme montré à la figure 1, un plateau 1, appartenant à une installation de transfert, supporte un objet 2 dont on veut codifier une information relative à un état ou une caractéristique. Le plateau 1 est susceptible d'être déplacé dans la direction indiquée par la flèche 3. Un dispositif de codage 4 est monté sur le plateau 1. Lors du déplacement du plateau 1, le dispositif de codage 4 est amené à passer devant un vérin 5 et un capteur 6, permettant respectivement de faire changer d'état au dispositif et de lire l'état du dispositif.

Comme montré à la figure 2, le dispositif de codage 4 comprend. un corps 7, de forme parallélépipèdique et réalisé en une matière synthétique. Il présente un évidement 8 parallélépipèdique débouchant dans deux faces adjacentes perpendiculaires 9 et 10.

Un logement 11, ménagé dans le corps 7, débouche dans l'évidement 8. L'axe du logement 11 passe par l'arête formant l'intersection des faces 9 et 10. Une rainure 12 est ménagée dans le corps 7, parallèlement à l'arête 13 délimitant les faces 9 et 10. Cette rainure débouche, d'une part, dans la face 9 et, d'autre part, dans l'évidement 8. Elle traverse le corps 7 de part en part dans la direction de déplacement du plateau. Deux trous 14 sont ménagés dans le corps 7 parallèlement et à proximité de l'arête 13, et de part et d'autre de l'évidement 8.

Le dispositif de codage contient un ressort 15 disposé dans le logement 11 et un élément de codage constitué par une bille 16, réalisée en acier, susceptible d'être logée dans l'évidement 8, et subissant l'action du ressort 15.

Le dispositif de codage comprend une tige cylindrique 17 pouvant être logée en partie dans les trous 14.

Le montage des différents éléments du dispositif de codage permet d'emprisonner la bille 16 dans l'évidement 8 du corps, entre le corps 7, le ressort 15 qui tend à pousser la bille 16 vers l'extérieur et la tige 17 qui forme un obstacle au déplacement de la bille 16 vers l'extérieur du corps 7. Le montage de la tige 17 fait apparaître une fenêtre 18 de l'ouverture de l'évidement 8, débouchant dans la face 9, et une fenêtre 19 de l'ouverture de l'évidement, débouchant dans la face 10.

Comme montré à la figure 3, la bille 16 occupe l'une ou l'autre de deux positions stables, dans laquelle elle est engagée dans l'une ou l'autre des fenêtres 18 et 19.

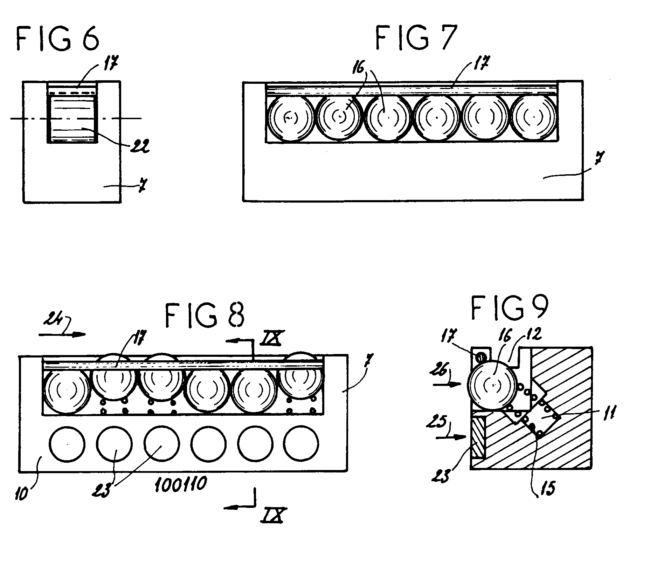

Comme montré à la figure 4, dans une première position stable ou position basse, la bille 16 est poussée vers l'extérieur du corps 7 par le ressort 15 et elle fait saillie par rapport à la face 10 dans laquelle débouche la fenêtre 19 de l'ouverture de l'évidement 8.

Un capteur inductif 6, non représenté à la figure 4, mais visible à la figure 1, est disposé selon la flèche 20. Il permet d'indiquer de façon automatique si la bille 16 est ou non en position basse.

Un effort sur la bille, exercé par un vérin, selon la direction de la flèche 20, permet de déplacer la bille 10. Dans ce cas, le ressort 15 est comprimé. Lorsque la bille 16 a été déplacée sur une distance suffisante, elle est poussée vers la fenêtre 18 de l'ouverture par le ressort 15 qui se détend.

La bille occupe alors une deuxième position stable, ou position haute, représentée à la figure 5, et dans laquelle la bille fait saillie par rapport à la face 9.

La flèche 21 indique la direction d'action d'un vérin 5 sur la bille 16, dans le cas où la bille 16 doit quitter la position haute pour rejoindre la position basse.

En associant à chacune des deux positions stables la valeur 0 ou la valeur 1, il est possible de mettre en mémoire une information relative à l'article 2 supporté par le plateau 1.

Grâce à la rainure 12, une came peut agir sur la bille 16, lorsque celle-ci est en position haute, lors du déplacement du plateau 1, afin de la faire passer à la position basse. En particulier, la rainure 12 peut permettre de remettre systématiquement la bille 16 en position basse en fin de ligne de transfert.

Comme montré à la figure 6, dans une variante d'exécution du dispositif de codage, I'élément de codage est constitué par un cylindre 22 dont l'axe est disposé parallèlement à la tige 17.

Comme montré à la figure 7, il est possible de monter sur un seul corps 7 et à l'aide d'une seule tige 17, plusieurs éléments de codage.

Comme montré aux figures 8 et 9, dans une variante d'exécution, le corps 7 est réalisé en une matière synthétique et des pièces métalliques 23 sont rapportées sur la face 10 du corps 7.

Chacune des pièces métalliques 23 est placée en correspondance avec une bille 16, dans une direction perpendiculaire au sens de déplacement indiqué par la flèche 24. Deux capteurs inductifs sont disposés en vis-à-vis de la face 10 de façon à être orientés selon les flèches 25 et 26. Le capteur inductif disposé en vis-à-vis d'une pièce métallique 23 permet de repérer la position, dans le sens du déplacement du plateau 1, de la bille 16 située au-dessus. Il est ainsi possible de lire une information codée et mémorisée sans arrêter le déplacement du plateau 1.

A titre d'exemple, si l'on attribue la valeur 1 à la position basse d'une bille 16 et la valeur 0 à la position haute, l'information représentée à la figure 8 est codée par le nombre binaire 100110.

Comme il ressort de ce qui précède, l'invention apporte une amélioration à l'état de la technique, en fournissant un dispositif de codage fiable, simple, ne nécessitant pas un entretien important, et de mise en oeuvre aisée.

L'invention ne se limite pas aux seules formes d'exécution de ce dispositif de codage décrites ci-dessus à titre d'exemples; elle en embrasse au contraire toutes les variantes.

C'est ainsi notamment que l'élément de codage pourrait ne pas être constitué par une bille ou un cylindre, que le ressort hélicoïdal 15 pourrait être remplacé par un ressort à lame ou par un bloc de matière élastique, ou encore que la tige 17 pourrait faire partie intégrante du corps du dispositif, ce corps étant alors réalisé en deux parties au moins, pour permettre le montage de la bille et du ressort, ou encore que, dans le cas de capteurs inductifs, chaque élément de codage ne fait pas nécessairement saillie par rapport à chaque face du corps dans laquelle débouche l'évidement le contenant, sans que l'on sorte pour autant du cadre de l'invention.

## Revendications

1. Dispositif de codage comportant un corps (7) dans lequel au moins un élément de codage est susceptible d'être déplacé entre deux positions stables prédéterminées, caractérisé en ce que le corps (7) présente au moins un évidement (8) débouchant dans deux faces adjacentes (9, 10) du corps (7), dans lequel sont disposés un élément de codage (16, 22) et un organe élastique (15) tendant à rejeter l'élément de codage vers l'extérieur de l'évidement (8), tandis qu'un obstacle (17), situé dans la zone d'intersection des faces (9, 10) dans lesquelles débouche l'évidement (8), et partageant l'ouverture de l'évidement (8) sur l'extérieur en deux fenêtres (18, 19), empêche l'élément de codage (16, 22) de s'échapper hors de l'évidement (8), et permet à l'élément de codage (16, 22) de se positionner de façon stable dans l'une ou l'autre des deux fenêtres (18, 19) de l'ouverture de l'évidement (8).

2. Dispositif selon la revendication 1, caractérisé en ce que chaque élément de codage (16, 22) fait partiellement saillie par rapport à une face (9, 10) du corps dans laquelle débouche l'évidement (8), lorsqu'il est positionné dans la fenêtre (18, 19) de l'ouverture correspondant à cette face (9, 10).

3. Dispositif selon la revendication 1 ou la revendication 2, caractérisé en ce que chaque élément de codage est constitué par une bille (16).

4. Dispositif selon la revendication 1 ou la revendication 2, caractérisé en ce que chaque élément de codage est constitué par un cylindre (22).

5. Dispositif selon l'une quelconque des revendications 1 à 4, caractérisé en ce que chaque organe élastique associé à un élément de codage est constitué par un ressort (15).

6. Dispositif selon l'une quelconque des revendications 1 à 5, caractérisé en ce que l'obstacle situé dans la zone d'intersection des deux faces dans lesquelles débouchent les fenêtres (18, 19) est constitué par une tige cylindrique (17), orientée parallèlement à l'arête formant l'intersection de ces deux faces.

7. Dispositif selon l'une quelconque des revendications 1 à 5, caractérisé en ce que l'évidement contenant chaque élément de codage débouche dans deux faces adjacentes perpendiculaires (9, 10) du corps (7).

8. Dispositif selon l'une quelconque des revendications 1 à 7, caractérisé en ce que le corps (7) présente au moins une rainure (12) ménagée dans une des faces (9, 10) dans lesquelles débouche l'évidement (8) et débouchant dans l'évidement (8) lui-même.

9. Dispositif selon l'une quelconque des revendications 1 à 8, caractérisé en ce que chaque élément de codage (16, 22) est métallique et le corps (7) est réalisé en un matériau synthétique.

10. Dispositif selon la revendication 9, caractérisé en ce que des pièces métalliques (23) sont rapportées sur au moins une face (9, 10) du corps dans laquelle débouche chaque évidement (8), ces pièces (23) métalliques étant chacune placée en vis-à-vis avec un élément de codage (16, 22).

## Claims

1. Coding device comprising a body (7) in which at least one coding element is capable of being displaced between two predetermined stable positions, characterised in that the body (7) has at least one recess (8) opening into two adjacent faces (9, 10) of the body (7), in which are disposed a coding element (16, 22) and a resilient member (15) tending to reject the coding element towards the exterior of the recess (8), whereas an obstacle (17), situated in the zone of intersection of the faces (9, 10) into which the recess (8) opens, and dividing the aperture of the recess (8) to the exterior into two windows (18, 19), prevents the coding element (16, 22) from escaping from the recess (8), and permits the coding element (16, 22) to position itself in stable manner in one or other of the two windows (18, 19) of the aperture of the recess (8).

2. Device according to Claim 1, characterised in that each coding element (16, 22) projects partially from a face (9, 10) of the body into which face the recess (8) opens, when said coding element is positioned in the window (18, 19) of the aperture corresponding to this face (9, 10).

3. Device according to Claim 1, or Claim 2, characterised in that each coding element is constituted by a ball (16).

4. Device according to Claim 1 or Claim 2, characterised in that each coding element is constituted by a cylinder (22).

5. Device according to ay of Claims 1 to 4, characterised in that each resilient member associated with a coding element is constituted by a spring (15).

6. Device according to any of Claims 1 to 5, characterised in that the obstacle situated in the zone of intersection of the two faces into which faces the windows (18, 19) open is constituted by a cylindrical rod (17), orientated parallel to the edge forming the intersection of these two faces.

7. Device according to any of Claims 1 to 5, characterised in that the recess containing each coding element opens into two perpendicular adjacent faces (9, 10) of the body (7).

8. Device according to any of Claims 1 to 7, characterised in that the body (7) has at least one slot (12) provided in one of the faces (9, 10) into which the recess (8) opens and opening into the recess (8) per se.

9. Device according to any of Claims 1 to 8, characterised in that each coding element (16, 22) is metallic and the body (7) is constructed in a synthetic material.

10. Device according to Claim 9, characterised in that metallic pieces (23) are added on at least one face (9, 10) of the body into which face each recess (8) opens, these metallic pieces (23) each being placed opposite a coding element (16, 22).

## Patentansprüche

1. Codiervorrichtung, die ein Gehäuse (7) beinhaltet, in dem wenigstens ein Codierelement zwischen zwei vorbestimmten stabilen Positionen bewegbar ist, **dadurch gekennzeichnet, daß** das Gehäuse (7) wenigstens eine in zwei benachbarte Flächen (9, 10) des Gehäuses (7) mündende Ausnehmung (8) aufweist, in der ein Kodierelement (16, 22) und ein elastisches Bauteil (15) angeordnet sind, wobei das elastische Bauteil (15) dazu tendiert, das Kodierelement (16, 22) aus der Ausnehmung (8) herauszustoßen, während ein Hindernis (17) das im Stoßbereich derjenigen Seiten (9, 10), in die die Ausnehmung (8) mündet, angeordnet ist, und das die Öffnung der Ausnehmung (8) nach außen in zwei Fenster (18, 19) teilt, das Kodierelement (16, 22) daran hindert, aus der Ausnehmung (8) herauszuspringen, und das Hindernis dem Codierelement (16, 22) erlaubt, in einer der beiden Fenster (18, 19) der Öffnung der Ausnehmung (8) eine stabile Position einzunehmen.

2. Vorrichtung nach Anspruch 1, **dadurch gekennzeichnet, daß** jedes Kodierelement (16, 22) im Bezug auf eine Seitenfläche (9, 10) des Gehäuses, in der die Ausnehmung (8) mündet, über diese Fläche etwas hervorsteht, wenn das Kodierelement in dem mit dieser Seitenfläche (9, 10) korrespondierenden Fenster (18, 19) positioniert ist.

3. Vorrichtung nach Anspruch 1 oder 2, **dadurch gekennzeichnet, daß** jedes Kodierelement aus einer Kugel gebildet ist.

4. Vorrichtung nach Anspruch 1 oder 2, **dadurch gekennzeichnet, daß** jedes Kodierungselement aus einem Zylinder (22) gebildet ist.

5. Vorrichtung nach einem der Ansprüche 1 - 4, **dadurch gekennzeichnet, daß** jedes elastische Bauteil, das einem Kodierelement zugeordnet ist, aus einer Feder (15) besteht.

6. Vorrichtung nach einem der Ansprüche 1 - 5, **dadurch gekennzeichnet, daß** das Hindernis, welches in dem Stoßbereich derjenigen zwei Seiten, in denen die Fenster (18, 19) münden, aus einem zylindrischen Stab (17) gebildet ist, der parallel zur Stoßkante der beiden Seiten angeordnet ist.

7. Vorichtung nach einem der Ansprüche 1 - 5, **dadurch gekennzeichnet, daß** die Aussparung, die jeweils ein Kodierelement aufnimmt, in zwei benachbarten, rechtwinklig zueinander angeordneten Seitenflächen (9, 10) des Gehäuses (7) mündet.

8. Vorrichtung nach einem der Ansprüche 1 - 7, **dadurch gekennzeichnet, daß** das Gehäuse (7) wenigstens eine Nut (12) aufweist, die in einer der Seitenflächen (9, 10), in denen die Ausnehmung (8) mündet, ausgespart ist, wobei die Nut in die Ausnehmung (8) selbst mündet.

9. Vorrichtung nach einem der Ansprüche 1 - 8, **dadurch gekennzeichnet, daß** jedes Kodierelement (16, 22) metallisch ist und daß das Gehäuse (7) aus einem synthetischen Material hergestellt ist.

10. Vorrichtung nach Anspruch 9, **dadurch gekennzeichnet, daß** Metallstücke (23) an wenigstens einer Seitenfläche (9, 10) des Gehäuses, in die jede Ausnehmung (8) mündet, angeordnet sind, wobei die Metallstücke (23) gegenüber einem Kodierelement (16, 22) benachbart plaziert sind.
